(19) Europäisches Patentamt
European Patent Office
Office européen des brevets

(11) **EP 4 648 516 A1**

(12) **EUROPEAN PATENT APPLICATION**
published in accordance with Art. 153(4) EPC

(43) Date of publication:
**12.11.2025 Bulletin 2025/46**

(21) Application number: **24738579.2**

(22) Date of filing: **05.01.2024**

(51) International Patent Classification (IPC):
**H04W 72/0453** (2023.01)

(52) Cooperative Patent Classification (CPC):
**H04W 24/10; H04W 72/0453; H04W 72/54;**
**H04W 72/542**

(86) International application number:
**PCT/CN2024/070949**

(87) International publication number:
**WO 2024/146648 (11.07.2024 Gazette 2024/28)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **05.01.2023 CN 202310014438**

(71) Applicant: **Beijing Unisoc Communications**
**Technology**
**Co., Ltd**
**Beijing 100083 (CN)**

(72) Inventors:
• **ZHANG, Zhongdan**
  **Beijing 100083 (CN)**
• **ZHOU, Huan**
  **Beijing 100083 (CN)**

(74) Representative: **Vossius & Partner**
**Patentanwälte Rechtsanwälte mbB**
**Siebertstrasse 3**
**81675 München (DE)**

(54) **COMMUNICATION METHOD AND APPARATUS, AND READABLE STORAGE MEDIUM**

(57)    Embodiments of the present application provide a communication method, an apparatus, and a readable storage medium. In the method, a first waveform is used for an uplink transmission, a terminal device sends power-related information of a second waveform to a network device, where the power-related information of the second waveform is used for assisting in determining waveform switching, and the second waveform is a candidate waveform. In view of the power-related information of the second waveform, the network device can select a waveform that is more suitable for uplink transmission, thereby improving transmission performance.

Terminal device — Network device

S201, Send power-related information of a second waveform

S202, Send a waveform switching instruction based on the power-related information

FIG. 2

**Description**

The present application claims priority to Chinese Patent Application No. 202310014438.4, filed to China National Intellectual Property Administration on January 05, 2023 and entitled "COMMUNICATION METHOD, APPARATUS, AND READABLE STORAGE MEDIUM", the content of which is hereby incorporated by reference in its entirety.

**TECHNICAL FIELD**

The present application relates to the field of communication technology and, in particular, to a communication method, an apparatus, and a readable storage medium.

**BACKGROUND**

In new radio (new radio, NR), a physical uplink shared channel (physical uplink shared channel, PUSCH) transmission supports two types of waveforms: a Cyclic Prefix-Orthogonal Frequency Division Multiplexing (cyclic prefix-orthogonal frequency division multiplexing, CP-OFDM) waveform and a Discrete Fourier Transform-spread Orthogonal Frequency Division Multiplexing (discrete fourier transform-spread orthogonal frequency division multiplexing, DFT-s-OFDM) waveform.

Specifically, a network device selects, based on a power headroom report (power headroom report, PHR) reported by a terminal device, a waveform from the P-OFDM waveform and FT-s-OFDM for waveform switching for the PUSCH transmission. However, an existing reported PHR only includes power information of a waveform actually used for the PUSCH transmission, the network device cannot make an appropriate waveform switching decision based on the existing reported PHR, which may easily lead to the switched waveform being unsuitable for the PUSCH transmission and thus reduce transmission performance. Therefore, how to select a waveform to achieve dynamic waveform switching to adapt to the PUSCH transmission and improve the performance is a problem worth studying.

**SUMMARY**

The present application relates to a communication method, an apparatus, and a readable storage medium, which can improve transmission performance.

In a first aspect, an embodiment of the present application provides a communication method, including: with a first waveform being used for an uplink transmission, sending power-related information of a second waveform, where the power-related information of the second waveform is used for assisting in determining waveform switching, and the second waveform is a candidate waveform.

In view of the power-related information of the second waveform, a waveform that is more suitable for the uplink transmission can be selected, thereby improving transmission performance.

In a possible implementation, the power-related information is used to indicate a change in power between the first waveform and the second waveform.

Based on the change in power between the first waveform and the second waveform, a waveform that is more suitable for the uplink transmission can be selected, thereby improving transmission performance.

In a possible implementation, the first waveform is a CP-OFDM waveform, and the second waveform is a DFT-s-OFDM waveform.

In a case where the CP-OFDM waveform is used for the uplink transmission, the power-related information of the second waveform is reported so as to facilitate selecting to switch to the DFT-s-OFDM waveform that is more suitable for the uplink transmission in a situation with poor network coverage, thereby improving coverage performance.

In a possible implementation, the first waveform is a DFT-s-OFDM waveform, and the second waveform is a CP-OFDM waveform.

In a case where the DFT-s-OFDM waveform is used for the uplink transmission, the power-related information of the second waveform is reported so as to facilitate selecting to switch to the CP-OFDM waveform that is more suitable for the uplink transmission in a situation with good network coverage, thereby improving throughput or spectrum effectiveness, etc.

In a possible implementation, the power-related information of the second waveform includes at least one of the following:

power headroom of the second waveform, a maximum transmitting power of the second waveform, a power headroom offset, or a maximum transmitting power offset;
where the power headroom offset is used to represent a difference between the power headroom of the second waveform and power headroom of the first waveform, and a maximum transmitting power offset is used to represent a difference between the maximum transmitting power of the second waveform and a maximum transmitting power of the first waveform.

Based on the power-related information of the second waveform, a waveform that is more suitable for the uplink transmission can be selected, thereby improving transmission performance.

In a possible implementation, the maximum transmitting power of the second waveform and the maximum transmitting power of the first waveform are different.

In a possible implementation, the power headroom of the second waveform is determined based on the maximum transmitting power of the second waveform;

or,

the power headroom of the second waveform is determined based on the maximum transmitting power of the second waveform, common target receiving power of a cell, terminal device dedicated target receiving power , a path loss compensation factor, a path loss and a closed-loop power control adjustment value; where the common target receiving power of the cell is determined based on an index of a preset parameter set, the terminal device dedicated target receiving power and the path loss compensation factor are determined based on an index of a preset terminal device dedicated target receiving power-path loss compensation factor set, the path loss is determined based on an index of a preset PUSCH path loss reference signal, and the closed-loop power control adjustment value is determined based on an index of a preset closed-loop power control state;

or,

the power headroom of the second waveform is determined based on the maximum transmitting power of the second waveform, the number of physical resource blocks RBs occupied by PUSCH, and a power adjustment amount; where the power adjustment amount is determined by a MCS, and the number of the RBs occupied by PUSCH and the MCS are predefined.

By using the method of the present application, the power headroom of the second waveform can be calculated more accurately.

In a possible implementation, the sending the power-related information of the second waveform includes: sending a media access control-control unit MAC CE, where the MAC CE includes the power-related information of the second waveform.

In a possible implementation, the uplink transmission is located on one carrier in carrier aggregation.

The method of the present application is also applicable to a carrier aggregation scenario. In the carrier aggregation scenario, after receiving the power-related information of the second waveform, a network device can combine the power-related information of the second waveform to select a waveform that is more suitable for the uplink transmission on a current carrier, thereby improving transmission performance.

In a possible implementation, the method further includes: receiving a waveform switching instruction.

The network device receives the power-related information of the second waveform and can select a waveform that is more suitable for the uplink transmission, thereby improving transmission performance.

In a second aspect, an embodiment of the present application provides a communication method, including:

with a first waveform being used for an uplink transmission, receiving power-related information of a second waveform, where the power-related information of the second waveform is used for assisting in determining waveform switching; and

sending a waveform switching instruction based on the power-related information of the second waveform.

In view of the power-related information of the second waveform, a waveform that is more suitable for the uplink transmission can be selected, thereby improving transmission performance.

In a possible implementation, the power-related information is used to indicate change information in power between the first waveform and the second waveform.

Based on the change in power between the first waveform and the second waveform, a waveform that is more suitable for the uplink transmission can be selected, thereby improving transmission performance.

In a possible implementation, the power-related information of the second waveform includes at least one of the following:

power headroom of the second waveform, a maximum transmitting power of the second waveform, a power headroom offset, or a maximum transmitting power offset;

where the power headroom offset is used to represent a difference between the power headroom of the second waveform and power headroom of the first waveform, and the maximum transmitting power offset is used to represent a difference between the maximum transmitting power of the second waveform and a maximum transmitting power of the first waveform.

Based on the power-related information of the second waveform, a waveform that is more suitable for the uplink transmission can be selected, thereby improving transmission performance.

In a possible implementation, the receiving the power-related information of the second waveform includes: receiving a MAC CE, where the MAC CE includes the power-related information of the second waveform.

In a third aspect, an embodiment of the present application provides a communication apparatus, including: a processing module and a communication module, where

the processing module is configured to, with a first waveform being used for an uplink transmission, trigger the communication module to send power-related information of a second waveform, where the power-related information of the second waveform is used for assisting in determining waveform switching, and the second waveform is a candidate waveform.

In a fourth aspect, an embodiment of the present application provides a communication apparatus, including: a communication module, where the communication module is configured to:

with a first waveform being used for an uplink transmission, receive power-related information of a second waveform, where the power-related information of the second waveform is used for assisting in determining waveform switching; send a waveform switching instruction based on the power-related information of the second waveform.

In a fifth aspect, an embodiment of the present application provides a communication apparatus, including: a processor, and a memory; where

the memory stores computer executed instructions therein; and
the processor executes the computer executed instructions stored in the memory, causing the processor to perform the method according to the fist aspect, or the method according to the second aspect.

In a possible implementation, the communication apparatus is an electronic device, a chip, or a chip module.

In a sixth aspect, an embodiment of the present application provides a computer-readable storage medium, where the computer-readable storage medium stores computer executed instructions therein, and when the computer executed instructions are executed by a processor, the method according to the fist aspect, or the method according to the second aspect is implemented.

In a seventh aspect, an embodiment of the present application provides a computer program product, including a computer program, and when the computer program is executed by a processor, the method according to the fist aspect, or the method according to the second aspect is implemented.

The embodiments of the present application provide a communication method, an apparatus, and a readable storage medium. In the method, a first waveform is used for an uplink transmission, a terminal device sends power-related information of a second waveform to a network device, where the power-related information of the second waveform is used for assisting in determining waveform switching, and the second waveform is a candidate waveform. In view of the power-related information of the second waveform, the network device can select a waveform that is more suitable for the uplink transmission so as to achieve waveform switching, thereby improving transmission performance.

**BRIEF DESCRIPTION OF DRAWINGS**

FIG. 1 is a schematic network architecture diagram of a communication system provided in an embodiment of the present application.
FIG. 2 is a flowchart of a communication method provided in an embodiment of the present application.
FIG. 3 is a schematic diagram 1 of a first time and a second time provided in an embodiment of the present application.
FIG. 4A is a schematic diagram 2 of a first time and a second time provided in an embodiment of the present application.
FIG. 4B is a schematic diagram 3 of a first time and a second time provided in an embodiment of the present application.
FIG. 5A is a schematic structure diagram 1 of a MAC CE provided in an embodiment of the present application.
FIG. 5B is a schematic structure diagram 2 of a MAC CE provided in an embodiment of the present application.
FIG. 5C is a schematic structure diagram 3 of a MAC CE provided in an embodiment of the present application.

FIG. 5D is a schematic structure diagram 4 of a MAC CE provided in an embodiment of the present application.

FIG. 6 is a schematic structure diagram of a communication apparatus provided in an embodiment of the present application.

FIG. 7 is a schematic structure diagram of another communication apparatus provided in an embodiment of the present application.

FIG. 8 is a schematic structure diagram of yet another communication apparatus provided in an embodiment of the present application.

**DESCRIPTION OF EMBODIMENTS**

In order to clarify the purpose, technical solutions, and advantages of the embodiments of the present application, the following will provide a clear and complete description of the technical solutions in the embodiments of the present application in conjunction with the accompanying drawings thereof. Obviously, the described embodiments are a part of the embodiments of the present application, not all of them. Based on the embodiments of the present application, all other embodiments obtained by those ordinary skilled in the art without creative labor are within the protection scope of the present application.

In the present application, "and/or" describes an association relationship of associated objects, and indicates that three relationships can exist. For example, A and/or B can indicate three situations: A exists alone; both A and B exist; B exists alone. In addition, the character "/" herein generally indicates that the associated objects are in an "or" relationship.

The expression "at least one (item) of the following", or similar expressions refer to any combination of such items, including any combination of single item (one) or plural items (ones). For example, at least one item (one) of a, b, or c can indicate: a; b; c; a and b; a and c; b and c; or a, b, and c, where each of a, b, and c may be an element itself or a set containing one or more elements.

In the present application, "at least one" means one or more. "Multiple" means two or more. The first, the second and so on appearing in the embodiments of the present application are only for the purpose of illustrating and distinguishing the objects described, and do not indicate any order, nor do they indicate a special limitation on the number of devices in the embodiments of the present application, and do not constitute any limitation on the embodiments of the present application. The first value and the second value, for example, are only for distinguishing different thresholds, and do not indicate the difference in size, priority, or importance, etc., of the two thresholds.

In the present application, "exemplarily", "in some embodiments", "in other embodiments", etc. are used to denote examples, illustrations or descriptions. Any embodiment or design solution described as "exemplarily" in the present application should not be construed as being preferred or advantageous over other embodiments or design solutions. Rather, the use of the term "exemplarily" is intended to present the concept in a concrete manner.

In the present application, the terms "of (of)", "corresponding (corresponding, relevant)", "corresponding (corresponding)" and "related" are sometimes used interchangeably, and it should be noted that the meanings intended to be conveyed are the same without emphasizing the differences. Communication and transmission are sometimes used interchangeably in the embodiments of the present application, and it should be noted that the meanings intended to be conveyed are the same without emphasizing the differences. For example, transmission may include sending and/or receiving, either as a noun or as a verb.

In the present application, "equal to" may be used in conjunction with "less than" or "greater than", but not with both "less than" and "greater than". When "equal to" and "less than" are used together, they apply to the technical solution used for "less than". When "equal to" and "greater than" are used together, they apply to the technical solution used for "greater than".

The technical solutions of the embodiments of the present application may be applied to a 5th generation (5th generation, 5G) mobile communication system or a new radio access technology (new radio access technology, NR), or a future mobile communication system such as a 6th generation (6th generation, 6G) mobile communication system.

Here, the 5G mobile communication system can use non-standalone networking (non-standalone, NSA) and/or standalone networking (standalone, SA).

In the embodiments of the present application, a network device may be any kind of device with wireless transceiver function. The device includes, but is not limited to: an evolved Node B (evolved Node B, eNB), a radio network controller (radio network controller, RNC), a Node B (Node B, NB), a base station controller (base station controller, BSC), a base transceiver station (base transceiver station, BTS), a home base station (e.g., a home evolved NodeB, or a home Node B, HNB), a baseband unit (baseband unit, BBU), an access point (access point, AP), a wireless relay node, a wireless backhaul node, a transmission point (transmission point, TP), or a transmission and reception point (transmission and reception point, TRP) in a wireless fidelity (wireless fidelity, WiFi) system, etc., and also a gNB or, a transmission point (TRP or TP) in a 5G system, e.g., an NR, system, one or a group of antenna panels (including multiple antenna panels) of a base station in a 5G system, or it can also be a network node that constitutes the gNB or the transmission point, such as a baseband unit (BBU), or a distributed unit (distributed unit, DU), etc.

In the embodiments of the present application, a terminal device may also be referred to as a user equipment (user equipment, UE), an access terminal, a user unit, a user station, a mobile station, a mobile platform, a remote station, a remote terminal, a mobile device, a user terminal, a terminal, a wireless communication device, a user agent, or a user device.

The terminal device can be a device that provide voice/data connectivity to a user, such as a handheld device, an in-vehicle device that have a wireless connectivity function, etc. At present, some examples of the terminal device can be: a mobile phone (mobile phone), a pad (pad), a computer with a wireless transceiver function (such as a laptop, a handheld computer, etc.), a mobile internet device (mobile internet device, MID), a virtual reality (virtual reality, VR) device, an augmented reality (augmented reality, AR) device, a wireless terminal device in industrial control, a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or other processing devices connected to a wireless modem, an in-vehicle device, a wearable device, a terminal device in a 5G network or a terminal device in a future evolved public land mobile network (public land mobile network, PLMN), etc.

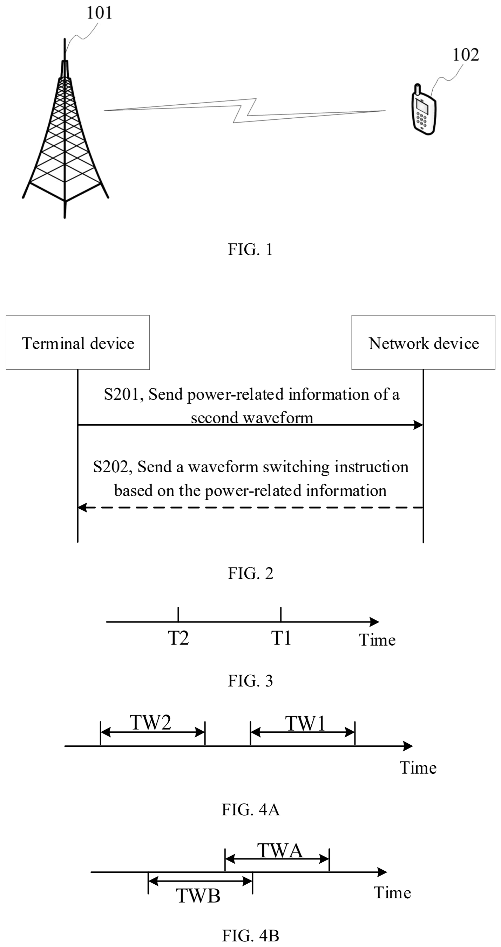

FIG. 1 shows a schematic network architecture diagram of a communication system provided in an embodiment of the present application. The communication system shown in FIG. 1 includes a network device 101 and a terminal device 102. The network device 101 can communicate with the terminal device 102 wirelessly.

FIG. 1 is only a schematic network architecture diagram of a communication system and does not constitute a limitation on the applicable communication system of the technical solutions provided in the present application. For example, the communication system of the embodiments of the present application may include multiple terminal devices or multiple network devices. Alternatively, the communication system of the embodiments of the present application may also include a core network device, etc.

In view of the issue raised in the background, the embodiments of the present application provide a communication method, by introducing a transmission performance condition and combining power-related information of a waveform employed for an uplink transmission supported by the transmission performance condition, to assist in a determination of waveform switching. Compared with waveform selection based solely on a PHR of a waveform that is currently used, the waveform selected in the present application is more suitable for the uplink transmission and helps improve the transmission performance.

For example, the waveform used for the uplink transmission can include a CP-OFDM waveform and a DFT-s-OFDM waveform. The CP-OFDM waveform is mainly used in a high-throughput scenario, which can maximize the utilization of the network capacity and improve the spectrum effectiveness in a dense city. The DFT-s-OFDM waveform is mainly used in a power constrained scenario to meet a demand of a larger coverage area.

First, some of the terms involved in the embodiments of the present application are explained and illustrated to facilitate understanding by those skilled in the art.

1. Maximum transmitting power $P_{\text{CMAX}}$ of a terminal device

In the embodiments of the present application, different waveforms may correspond to different $P_{\text{CMAX}}$. For example, the uplink transmission supports a first waveform and a second waveform, where the $P_{\text{CMAX}}$ of the first waveform is different from the $P_{\text{CMAX}}$ of the second waveform. Under a specific transmit PRB configuration and application scenario, the terminal device is allowed to set the output maximum transmitting power $P_{\text{CMAX}}$ within a limited range.

Exemplarily, $P_{\text{CMAX}}$ can satisfy the following expression:

$$P_{\text{CMAX,L}} \leq P_{\text{CMAX}} \leq P_{\text{CMAX,H}}$$

$$P_{\text{CMAX,L}} = MIN\{P_{\text{EMAX}} - \Delta T_{\text{C}}, \ (P_{\text{PowerClass}} - \Delta P_{\text{PowerClass}}) -$$

$$MAX(MAX(MPR + \Delta MPR, A - MPR) + \Delta T_{\text{IB}} + \Delta T_{\text{C}} + \Delta T_{\text{RxSRS}}, P - MPR)\};$$

$$P_{\text{CMAX,H}} = MIN\{P_{\text{EMAX}}, P_{\text{PowerClass}} - \Delta P_{\text{PowerClass}}\};$$

where $P_{\text{EMAX}}$ indicates the maximum output power allowed by a network, and a value of $P_{\text{EMAX}}$ can be given by an *additionalPmax* field of p-Max IE or NR-NS-PmaxList IE.

$\Delta T_{\text{C}}$ indicates the low-end tolerance of the maximum output power requirement, $\Delta T_{\text{C}} = 1.5$ dB when a transmit bandwidth of a serving cell unit c is in a range of 4 MHz at an upper end or 4 MHz at a lower end of a frequency band, otherwise, $\Delta T_C = 0$ dB.

$P_{PowerClass}$ indicates a power class of the terminal device, which is the maximum terminal device power without considering the output power tolerance.

$\Delta P_{PowerClass}$ indicates the amount of change in the power class of the terminal device after taking into account the specific absorption ratio (specific absorption ratio, SAR) requirement for the protection of the human body against electromagnetic radiation.

MPR (maximum power reduction) indicates the maximum power reductionvalue.

A-MPR (additional maximum power reduction) indicates the additional maximum power reduction value.

$\Delta MPR$ indicates the amount of change of MPR in a particular frequency band; for example, in NR bands n28 and n83, when an energy class is 3 and a bandwidth is 30 MHz, $\Delta MPR$ can be 0.5 dB; in NR bands n40 and n97, when an energy class is 2-3 and a bandwidth is 100 MHz, $\Delta MPR$ can be 1 dB.

$\Delta T_{IB}$ indicates a loss value introduced by a frequency band combining and is a parameter related to carrier aggregation (carrier aggregation, CA)/dual connectivity (dual connectivity, DC).

$\Delta T_{RxSRS}$ is a parameter related to SRS and bandwidth.

P-MPR (power management maximum power reduction) indicates the power management maximum power reduction.

It should be understood that $P_{CMAX,L}$ is affected by the maximum power reduction, and different waveforms have different peak to average power ratio (peak to average power ratio, PAPR) characteristics. The linear operating point of the power amplifier of the terminal device may be different for different waveforms, so the MPR required for different waveforms is different, resulting in different maximum transmission powers for different waveforms. For example, the CP-OFDM waveform and the DFT-s-OFDM waveform have different PRAR characteristics, therefore, the MPR of the CP-OFDM waveform and the MPR of the DFT-s-OFDM waveform are different, resulting in that the $P_{CMAX}$ of the CP-OFDM waveform and the $P_{CMAX}$ of the DFT-s-OFDM waveform are different.

2. Power headroom (power headroom, PH)

In the embodiments of the present application, PH can indicate the difference between the maximum transmitting power of the terminal device and the current transmission power of PUSCH. For example, a positive value of PH indicates the amount of remaining power available to the terminal device in addition to the power used by the PUSCH transmission. As another example, a negative value of PH indicates the amount of power used by the PUSCH transmission that exceeds the maximum transmitting power of the terminal device.

For example, PH in the embodiments of the present application may be understood to be a Type 1 PH in NR.

Exemplarily, PH satisfies the following expression:

$$PH = P_{CMAX} - \{P_{O\_PUSCH} + 10\log_{10}(2^\mu \cdot M_{RB}^{PUSCH}) + a \cdot PL + \Delta_{TF} + f\}$$

where PH indicates the power headroom; $P_{CMAX}$ indicates the maximum transmitting power configured of the terminal device; $P_{O\_PUSCH}$ indicates a target receiving power of the PUSCH; $\mu$ indicates a subcarrier spacing; $M_{RB}^{PUSCH}$ indicates the number of resource blocks (resource blocks, RBs) occupied by the PUSCH; $\alpha$ indicates a path loss compensation factor; PL indicates a path loss; $\Delta_{TF}$ indicates the power adjustment amount; $f$ indicates a closed-loop power control adjustment value.

Taking the first waveform being the waveform actually used for the uplink transmission and the second waveform being the waveform not used for the uplink transmission as examples, the parameters of the above formula will be introduced in the following.

If the PH involved in the above formula is the PH of the first waveform, then $P_{CMAX}$ in the above formula is the $P_{CMAX}$ of the first waveform.

$P_{O\_PUSCH}$ indicates PUSCH target power when the terminal device uses the first waveform for the uplink transmission, and is determined by a parameter set with index $j$, specifically, composed of common target receiving power of a cell $P_{O\_NOMINAL,PUSCH}(j)$ and terminal device dedicated target receiving power $P_{O\_UE\_PUSCH}(j)$.

$\alpha$ indicates the path loss compensation factor when the terminal device uses the first waveform for the uplink transmission, and is determined by the parameter set with index $j$.

The parameter set of $j$ is {0, 1, 2,..., J-1}. J is the total number of indices in the parameter set. That is to say, the value of $j$ can be 0, 1, 2,..., J-1. Specifically, the values of $j$ are different, and the values of $P_{O\_PUSCH}$ and $\alpha$ are also different. For a case where the first waveform is the actual waveform used for uplink transmission, the value of $j$ corresponds to the power control of PUSCH in different application scenarios. For example, if $j$ is greater than 2, it corresponds to the power control of dynamically scheduling PUSCH.

When the values of $j$ are different, and the values of $P_{O\_PUSCH}$ and $\alpha$ are also different. Exemplarily, the following four scenarios illustrate the corresponding values of $P_{O\_PUSCH}$ and $\alpha$ for different $j$ values.

$$(1)\, j=0$$

$$P_{O\_\text{PUSCH}}(0) = P_{O\_UE\_\text{PUSCH}}(0) + P_{O\_NOMINAL,\text{PUSCH}}(0);$$

where

$$P_{O\_UE\_\text{PUSCH}}(0) = 0;$$

$$P_{O\_NOMINAL,\text{PUSCH}}(0) = P_{O\_\text{PRE}} + \Delta_{\text{PREAMBLE,Msg3}};$$

$$\text{i.e., } P_{O\_\text{PUSCH}}(0) = P_{O\_NOMINAL,\text{PUSCH}}(0) = P_{O\_\text{PRE}} + \Delta_{\text{PREAMBLE,Msg3}};$$

where, $P_{O\_\text{PRE}}$ indicates target power for receiving preamble, and $\Delta_{\text{PREAMBLE,Msg3}}$ is configured by parameter *msg3-DeltaPreamble* in a system information block (system information block, SIB) 1. If the *msg3-DeltaPreamble* parameter is not configured, $\Delta_{\text{PREAMBLE,Msg3}}$ is 0dB.

$\alpha(0)$ may be provided by parameter *msg3-Alpha* or parameter *msgA-Alpha* in SIB1, i.e., $\alpha(0)$ = *msg3-Alpha* or *msgA-Alpha*; if the parameter *msg3-Alpha* or the parameter *msgA-Alpha* is not provided in SIB1, then $\alpha(0)$ = 1.

$$(2)\, j=1$$

$$P_{O\_\text{PUSCH}}(1) = P_{O\_UE\_\text{PUSCH}}(1) + P_{O\_NOMINAL,\text{PUSCH}}(1)$$

where $P_{O\_NOMINAL,PUSCH}(1)$ is configured by parameter *p0-NominalWithoutGrant* in SIB1, if the parameter *p0-NominalWithoutGrant* is not configured in SIB1, calculation is performed with reference to j=0.

For $P_{O\_UE\_\text{PUSCH}}(1)$ and $\alpha(1)$, *p0-PUSCH-AlphaSetId* is obtained based on *p0-PUSCH-Alpha* parameter configured in *ConfiguredGrantConfig,* and then *p0* and *Alpha* corresponding to *p0-PUSCH-AlphaSetId* within *p0-PUSCH-AlphaSet* of SIB1 are taken as $P_{O\_UE\_\text{PUSCH}}(1)$ $\alpha(1)$, respectively.

$$(3)\, j=2$$

$$P_{O\_\text{PUSCH}}(2) = P_{O\_UE\_\text{PUSCH}}(2) + P_{O\_NOMINAL,\text{PUSCH}}(2)$$

where $P_{O\_NOMINAL,PUSCH}(2)$ is configured by parameter *p0-NominalWithoutGrant* in SIB1, if the parameter *p0-NominalWithoutGrant* is not configured in SIB1, calculation is performed with reference to j=0.

$P_{O\_UE\_\text{PUSCH}}(2)$ is provided by *p0* within the first *p0-PUSCH-AlphaSet* of the parameter *p0-AlphaSets.*

$\alpha(2)$ is provided by *Alpha* within the first *p0-PUSCH-AlphaSet* of the parameter *p0-AlphaSets.*

$$(4)\, j \in \{2,\ldots,\text{J-1}\}$$

where $P_{O\_NOMINAL,PUSCH}(j)$ is configured by parameter *p0-NominalWithoutGrant* in SIB1, if the parameter *p0-NominalWithoutGrant* is not configured in SIB1, calculation is performed with reference to *j*=0.

Based on an SRS resource indicator (resource indicator, SRI) field in DCI format 0_1, mapping to *sri-PUSCH-PowerControlId* is performed, and then mapping to the corresponding *p0* and *alpha* as $P_{O\_UE\_\text{PUSCH}}(j)$ and as $\alpha(j)$ is performed through the index *p0-PUSCH-AlphaSetId.* $M_{RB}^{PUSCH}$ indicates the number of RBs currently occupied by PUSCH when the terminal device uses the first waveform for the uplink transmission.

PL indicates the path loss obtained through measuring a reference signal with index $q_d$ when the terminal device uses the first waveform for the uplink transmission. The reference signal can be a synchronization signal block (synchronization signal block, SSB) or a channel state information reference signal (channel state information-reference signal, CSI-RS).

Taking dynamically scheduling PUSCH as an example, if the terminal device uses the first waveform for the PUSCH transmission, the PUSCH is scheduled by DCI 0_1/_2.

If a series of reference signal indices are configured in *PUSCH-PathlossReferenceRS,* a reference signal index is indicated by the *pusch-PathlossReferenceRS-Id* and can include SSB index and/or CSI-RS index. The terminal device determines whether the reference signal index $q_d$ refers to SSB or CSI-RS based on *pusch-PathlossReferenceRS-Id* in *PUSCH-PathlossReferenceRS.*

If there is no SRI field in DCI format 0_1/_2, or if the *SRI-PUSCH-PowerControl* parameter is not configured, the reference signal index $q_d$ is obtained based on *pusch-PathlossReferenceRS-Id*=0. At this time, the reference signal resource belongs to the serving cell *c*, or points to the configured serving cell with the parameter *pathlossReferenceLinking* configured.

$\Delta_{\text{TF}}$ indicates the power adjustment amount determined by a corresponding modulation and coding scheme (modulation and coding scheme, MCS) class in a case where the terminal device uses the first waveform for uplink transmission.

Specifically, $\Delta_{\text{TF}}$ is determined based on Ks. For example, when Ks = 0, $\Delta_{\text{TF}}$ = 0. Then, for example, when Ks = 1.25, $\Delta_{\text{TF}}$ is determined based on bits per resource element (bits per resource element, BPRE) and $\beta_{\text{offset}}^{\text{PUSCH}}$ .

$\beta_{\text{offset}}^{\text{PUSCH}}$ indicates an offset parameter related to whether or not the PUSCH contains uplink shared channel (uplink shared channel, UCL) data. In the embodiments of the present application, Ks is determined by parameter deltaMCS in SIB1. Ks=1.25 if the value of *deltaMCS* is *enabled,* and Ks=0 if this parameter is not configured.

*f* indicates a closed-loop power control adjustment value when an index of a closed-loop power control state corresponding to that the terminal device uses the first waveform for uplink transmission is *l*.

If parameter *twoPUSCH-PC-AdjustmentStates* is configured, then $l \in \{0,1\}$.

If parameter *twoPUSCH-PC-AdjustmentStates* is not configured or for the PUSCH transmission (Msg3) of uplink grant in random access response (random access response, RAR), then *l*=0.

A calculation method of *f* is determined by parameter *tpc-Accumulation*; when the parameter is configured as *enabled* or the parameter is not configured, a cumulative method is used for power adjustment; when the parameter is configured as *disabled,* absolute value is used for power adjustment.

If the PH involved in the above formula is the PH of the second waveform, then a definition of each parameter in the above formula can be divided into the following three situations.

An implementation is: if the PH involved in the above formula is the PH of the second waveform, $P_{\text{CMAX}}$ is the $P_{\text{CMAX}}$ of the second waveform, and other parameters such as $P_{O\_\text{PUSCH}}$, $M_{\text{RB}}^{\text{PUSCH}}$, $\alpha$, PL, $\Delta_{\text{TF}}$, *f* are the same as the relevant parameters used to calculate the PH of the first waveform. For example, taking $P_{O\_\text{PUSCH}}$ as an example, $P_{O\_\text{PUSCH}}$ used to calculate the PH of the second waveform is the same as $P_{O\_\text{PUSCH}}$ used to calculate the PH of the first waveform.

Another implementation is: if the PH involved in the above formula is the PH of the second waveform, specifically, the PH of the second waveform is:

$$ PH = P_{\text{CMAX}} - \{P_{O\_\text{PUSCH}} + \alpha \cdot PL + f\} $$

$P_{\text{CMAX}}$ is the $P_{\text{CMAX}}$ of the second waveform; $P_{O\_\text{PUSCH}}$ is the target receiving power corresponding to the second waveform, and is obtained from $P_{O\_\text{NOMINAL,PUSCH}}(0)$ and *p0* corresponding to *p0-PUSCH-AlphaSetId* = 0; $\alpha$ is a path loss compensation factor corresponding to the second waveform, and is obtained from *Alpha* corresponding to *p0-PUSCH-AlphaSetId* = 0; *PL* indicates a path loss corresponding to the second waveform, and can be obtained based on a reference signal resource index $q_d$ corresponding to *pusch-PathlossReferenceRS-Id* = 0; *f* indicates a closed-loop power control adjustment value corresponding to the second waveform, where a closed-loop power control state index *l* = 0, and the calculation method refers to the calculation method of the closed-loop power control adjustment value corresponding to the first waveform; $\mu$ is the same as the $\mu$ used to calculate the pH of the first waveform.

Yet another implementation is: if the PH involved in the above formula is the PH of the second waveform, $P_{\text{CMAX}}$ is the $P_{\text{CMAX}}$ of the second waveform, and $M_{\text{RB}}^{\text{PUSCH}}$ is the number of RBs corresponding to the second waveform, the number of RBs is a predefined value; $\Delta_{\text{TF}}$ is a power offset determined by a MCS class corresponding to the second waveform, and the MCS class is a predefined value; $P_{O\_\text{PUSCH}}$, $\mu$, $\alpha$, PL, and *f* are all the same as the relevant parameters used to calculate the PH of the first waveform.

The above three implementations only list partial determination methods for the PH of the second waveform, and the present application does not specifically limit the PH of the second waveform. Exemplarily, based on that $P_{CMAX}$ is the $P_{CMAX}$ of the second waveform, one or more of the remaining parameters can be pre-agreed upon to calculate the PH of the second waveform. For parameters that are not pre-agreed upon, the parameter values for calculating the PH of the first waveform can be used.

Furthermore, in the embodiments of the present application, PH may be reported by the terminal device to the network device through PHR.

It should be noted that in the embodiments of the present application, pH of different waveforms may be different or the same.

As shown in FIG. 2, it is a flowchart of a communication method according to an embodiment of the present application, which specifically includes the following steps:

S201, a terminal device sends power-related information of a second waveform. Correspondingly, a network device receives the power-related information of the second waveform.

The second waveform can be a candidate waveform, and a waveform currently used by the terminal device for uplink transmission can be a first waveform, which is different from the second waveform.

Exemplarily, the first waveform may be the CP-OFDM waveform or the DFT-s-OFDM waveform, and the second waveform may be the DFT-s-OFDM waveform or the CP-OFDM waveform. When the first waveform is the CP-OFDM waveform, the second waveform is the DFT-s-OFDM waveform; when the first waveform is the DFT-s-OFDM waveform, the second waveform is the CP-OFDM waveform.

In a possible implementation, the power-related information of the second waveform can also be referred to as PHR of the second waveform.

In a possible implementation, the power-related information of the second waveform is used for assisting in determining waveform switching.

As an example, the power-related information of the second waveform includes power headroom of the second waveform. As another example, the power-related information of the second waveform includes $P_{CMAX}$ of the second waveform, an offset between the power headroom of the second waveform and power headroom of the first waveform. As yet another example, the power-related information of the second waveform includes an offset between $P_{CMAX}$ of the second waveform and $P_{CMAX}$ of the first waveform, as well as the offset between the power headroom of the second waveform and the power headroom of the first waveform. As yet another example, the power-related information of the second waveform includes the power headroom of the second waveform, the offset between $P_{CMAX}$ of the second waveform and $P_{CMAX}$ of the first waveform. Alternatively, the power-related information of the second waveform includes the power headroom of the second waveform and $P_{CMAX}$ of the second waveform.

In a possible implementation, the power-related information of the second waveform is used for indicating a change in power between the first waveform and the second waveform. Alternatively, the power-related information of the second waveform can be used for indicating $P_{CMAX}$ and/or PH of the second waveform.

It should be noted that when the power-related information of the second waveform is used for indicating the change in power, the power-related information of the second waveform can be used for assisting in determining waveform switching, or not used for assisting in determining waveform switching. The specific use depends on an implementation of the network device and is not limited to this.

In a possible implementation, the terminal device can not only send power-related information of the second waveform, but also send PHR of the first waveform. The power-related information of the second waveform can be sent simultaneously or separately from PHR of the first waveform.

Furthermore, in some embodiments, step S202 is also included:

S202, the network device sends a waveform switching instruction based on the power-related information of the second waveform. Correspondingly, the terminal device receives the waveform switching instruction.

In some embodiments of the present application, if the network device determines to switch waveforms, it sends the waveform switching instruction. In this case, the waveform switching indication is used to indicate switching or the second waveform. The terminal device receives the waveform switching instruction and switches the waveform used for the uplink transmission to the second waveform.

Alternatively, if the network device determines not to switch waveforms, it sends the waveform switching instruction. In this case, the waveform switching indication is used to indicate not switching or the first waveform. The terminal device receives the waveform switching instruction and continues to use the first waveform for uplink transmission.

Alternatively, if the network device determines not to switch waveforms, it may not send the waveform switching instruction.

It should be noted that the network device not only can refer to the power-related information of the second waveform to determine whether to perform waveform switching, but also can refer to other information (such as PHR of the first waveform, uplink channel quality, etc.) to determine whether to perform waveform switching, so that the determination of waveform switching is more suitable for uplink transmission. The embodiments of the present application do not limit whether the determination of waveform switching refers to information other than the second waveform information. Of course, the network device can also refer only to the power-related information of the second waveform when determining waveform switching.

In a possible implementation, when the first waveform is used for the uplink transmission, the terminal device can send the power-related information of the second waveform to the network device after determining that signal quality satisfied a transmission performance condition.

Here, the signal quality can refer to signal quality of uplink and/or downlink signals.

Exemplarily, the uplink transmission can be a PUSCH transmission. Alternatively, the uplink transmission can also be understood as transmission of other uplink channels. For example, if the first waveform is used for the uplink transmission, it can be understood that a waveform actually used by the terminal device for the uplink transmission is the first waveform, or the waveform currently used by the terminal device for the uplink transmission is the first waveform.

In a possible implementation, the transmission performance condition supports the use of the second waveform for the uplink transmission. It should be noted that the transmission performance condition supports the use of the second waveform for the uplink transmission, which can be understood as the second waveform being more suitable or satisfying the transmission performance condition. Specifically, that the transmission performance condition supports the use of the second waveform for the uplink transmission, in other words, means that the transmission performance condition recommends the use of the second waveform for the uplink transmission. Alternatively, the transmission performance condition can be understood as a condition that triggers the reporting of power-related information of the second waveform.

In the following, taking the CP-OFDM waveform and the DFT-s-OFDM waveform being supported by uplink transmission as examples, and the transmission performance condition is described in detail in conjunction with Example 1 and Example 2, respectively.

Example 1: The first waveform is the CP-OFDM waveform, and the second waveform is the DFT-s-OFDM waveform. That is to say, the waveform actually used for the uplink transmission is the CP-OFDM waveform, while the DFT-s-OFDM waveform is considered by the terminal device as more suitable for the uplink transmission.

In this case, the transmission performance condition can also be understood as a coverage performance condition. Exemplarily, the transmission performance condition may include: reference signal receiving power (reference signal receiving power, RSRP) is less than a first RSRP threshold; and/or, a path loss at a first time is greater than a path loss at a second time, and the difference between the path loss at the first time and the path loss at the second time is greater than a first value; and the first time is after the second time. It thus helps to switch to the DFT-s-OFDM waveform that is more suitable for uplink transmission in a situation with poor network coverage, thereby improving the coverage performance.

That is to say, when the first waveform is the CP-OFDM waveform and the second waveform is the DFT-s-OFDM waveform, that is, if the CP-OFDM waveform is used for the uplink transmission, the terminal device can send the power-related information of the DFT-s-OFDM waveform to the network device as long as the terminal device satisfies any of the following conditions:

condition 1: the RSRP is less than the first RSRP threshold;
condition 2: the path loss at the first time is greater than the path loss at the second time, and the difference between the path loss at the first time and the path loss at the second time is greater than a first value;
condition 3: the RSRP is less than the first RSRP threshold, the path loss at the first time is greater than the path loss at the second time, and the difference between the path loss at the first time and the path loss at the second time is greater than a first value.

In a possible implementation, the RSRP involved in the above conditions can be measured by the terminal device based on a reference signal sent by the network device. For example, the reference signal can be CSI-RS.

In a possible implementation, the first RSRP threshold can be configured by the network device, or it can be predefined through a protocol. Alternatively, the first RSRP threshold may be determined by the terminal device based on a certain rule or a strategy, and the embodiments of the present application is not limited to this.

In addition, a unit of the above first time and the second time may be a moment, or a time unit such as (a frame, a subframe, a time slot, a symbol, etc.), or, the above first time and the second time may also be understood as a time period.

As an example, the time unit is a moment. In this case, the path loss at the first time refers to a path loss at a first moment, and the path loss at the second time refers to a path loss at a second moment. As shown in FIG. 3, moment T1 is the first time, and moment T2 is the second time, i.e., the path loss at the first time is a path loss at moment T1, and the path loss at the second time is a path loss at moment T2.

As an example, the time is understood as a time unit. The path loss at the first time can be understood as a path loss in a first time unit, and the path loss at the second time can be understood as a path loss in a second time unit

As an example, the time is understood as a time period. The path loss at the first time can be understood as a path loss in a first time period, and the path loss at the second time can be understood as a path loss in a second time period.

Exemplarily, the path loss in the first time period may be determined based on path losses of a plurality of time units within the first time period. For example, the path loss in the first time period may be an average of the path losses of the plurality of time units within the first time period. It is noted that the plurality of time units within the first time period may be a plurality of time units indicated by the network device or a plurality of time units determined by the terminal device based on a certain strategy or a rule, and there is no limitation on this.

As another example, the path loss in the first time period may be determined based on path losses at a plurality of moments within the first time period.

Regarding the path loss in the second time period, please refer to the relevant description of the path loss in the first time period, which will not be repeated here.

In addition, in a case where the path loss at the first time is the path loss in the first time period and the path loss at the second time is the path loss in the second time period, the first time is after the second time, which means that the first time period is after the second time period. A starting moment of the first period is after a starting moment of the second period, and an ending time of the first period is after an ending time of the second period. It should be noted that there may or may not be an overlap in time between the first time period and the second time period.

In a possible implementation, a duration of the first time period can be the same as a duration of the second time period.

As shown in FIG. 4A, TW1 is the first time period and TW2 is the second time period. There is no overlap in time between TW1 and TW2, and a duration of TW1 is the same as a duration of TW2. The path loss in the first time period is a path loss of TW1, and the path loss in the second time period is a path loss of TW2.

As shown in FIG. 4B, TWA is the first time period and TWB is the second time period. TW1 and TW2 have a partial overlap in time, and a duration of TWA is the same as a duration of TWA. A path loss in the first time period is a path loss of TWA, and a path loss in the second time period is a path loss of TWB.

Furthermore, in the embodiments of the present application, the path loss at the first time can be understood as a downlink path loss at the first time reported by the terminal device. Similarly, the path loss at the second time can be understood as a downlink path loss at the second time reported by the terminal device. Alternatively, the path loss at the first time can be understood as an uplink path loss at the first time, which is determined based on the downlink path loss at the first time; the path loss at the second time can be understood as a uplink path loss at the second time, which is determined based on the downlink path loss at the second time.

Specifically, the first value may be configured by the network device, may be determined by the terminal device based on a rule or a strategy, or may be predefined by a protocol, and there is no limitation on this.

Exemplarily, the first value may refer to *phr-Tx-PowerFactorChange* or it may be a newly configured threshold.

Example 2: The first waveform is the DFT-s-OFDM waveform and the second waveform is the CP-OFDM waveform. In other words, the waveform actually used for the uplink transmission is the DFT-s-OFDM waveform, while the CP-OFDM waveform is considered by the terminal device as more suitable for the uplink transmission.

In this case, the transmission performance condition can also be understood as a performance condition such as throughput, spectrum effectiveness, and the like. Exemplarily, the transmission performance condition may include: the RSRP is greater than a second RSRP threshold; and/or, the path loss at the first time is less than the path loss at the second time, and the difference between the path loss at the second time and the path loss at the first time is greater than a first threshold; and the first time is after the second time. It thus helps to select to switch to the CP-OFDM waveform that is more suitable for uplink transmission to perform uplink transmission in a situation with good network coverage, thereby improving throughput, or spectrum effectiveness, or the like.

That is, when the first waveform is the DFT-s-OFDM waveform and the second waveform is the CP-OFDM waveform, i.e., if the DFT-s-OFDM waveform is used for the uplink transmission, the terminal device can send power-related information of the CP-OFDM waveform to the network device as long as the terminal device satisfies any of the following conditions:

condition 1: the RSRP is greater than the second RSRP threshold;
condition 2: the path loss at the first time is less than the path loss at the second time, and the difference between the path loss at the first time and the path loss at the second time is greater than a second value;
condition 3: the RSRP is greater than the second RSRP threshold, the path loss at the first time is less than the path loss at the second time, and the difference between the path loss at the first time and the path loss at the second time is greater than the second value.

Regarding the RSRP, the path loss at the first time, the path loss at the second time, etc., please refer to the relevant description in Example 1. Regarding the second RSRP threshold, please refer to the relevant description of the first RSRP threshold in Example 1. Regarding the second value, please refer to the relevant description of the first value, which will not be repeated here.

It is noted that the first RSRP threshold and the second RSRP threshold may or may not be equal. For example, in a case where the first RSRP threshold and the second RSRP threshold are unequal, if the first RSRP threshold < RSRP < second RSRP threshold, the terminal device may not report the power-related information of the second waveform to the network device. In addition, the first value and the second value may be equal or unequal, and there is no limitation on this.

Of course, the above is only a measure of the network coverage by RSRP and path loss. In the embodiments of the present application, the transmission performance condition can also measure the network coverage by other parameters such as reference signal receiving quality (reference signal receiving quality, RSRQ) to trigger the reporting of the power-related information of the second waveform, there is no limitation on this.

In the following, the power-related information of the second waveform is described in detail.

In some embodiments, the terminal device reports the power-related information of the second waveform to the network device via a media access control-control element (media access control - control element, MAC CE). That is, the terminal device sends the MAC CE to the network device, and the MAC CE includes the power-related information of the second waveform.

Exemplarily, the power-related information of the second waveform is reported by adding at least one byte into the MAC CE. Alternatively, the power-related information of the second waveform is reported through a reserved bit in the MAC CE.

Exemplarily, the power-related information of the second waveform includes at least one of the following:

PH of the second waveform, the maximum transmitting power $P_{CMAX}$ of the second waveform, power headroom offset *offset1*, the maximum transmitting power offset *offset2*;
where *offset1* is used to represent the difference between the power headroom of the second waveform and the power headroom of the first waveform; *offset2* is used to represent the difference between the maximum transmitting power of the second waveform and the maximum transmitting power of the first waveform.

In a possible implementation, the difference can be an absolute value of the difference or the difference itself.

For example, when the difference between the power headroom of the second waveform and the power headroom of the first waveform is positive, the difference is the difference itself; when the difference between the power headroom of the second waveform and the power headroom of the first waveform is negative, the difference is the absolute value of the difference.

In a possible implementation, the $P_{CMAX}$ of the second waveform is different from the $P_{CMAX}$ of the first waveform.

Furthermore, the terminal device also reports power-related information of the first waveform to the network device, such as the PH and $P_{CMAX}$ of the first waveform. Exemplarily, the power-related information of the first waveform and the power-related information of the second waveform can be reported together. For example, the power-related information of the first waveform and the power-related information of the second waveform are reported through one MAC CE. The power-related information of the first waveform and the power-related information of the second waveform can be reported separately. For example, the power-related information of the first waveform is reported through one MAC CE, and then the power-related information of the second waveform is reported through another MAC CE.

The following provides a detailed introduction to the reporting methods based on the different reporting situations of the power-related information of the first waveform and the second waveform.

For example, if the transmission performance condition is satisfied, the terminal device reports the PH of the first waveform, the $P_{CMAX}$ of the first waveform, and the PH of the second waveform through one MAC CE.

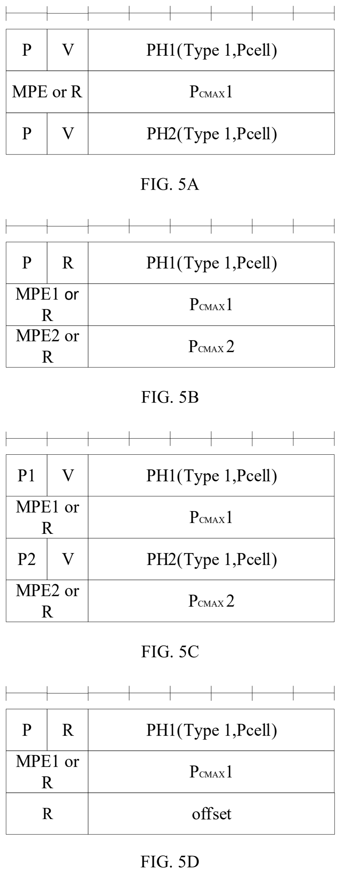

FIG. 5A is a schematic structure diagram 1 of a MAC CE provided in an embodiment of the present application. As shown in FIG. 5A, one 8-bit byte is added into a MAC CE.

P field has a field length of 1 bit, and this field indicates whether the maximum transmitting power $P_{CMAX}$ has undergone power reduction due to power management. If the P field is set to 1, MPE field should indicate a power reduction value and the MPE is reported through quantization, specifically, as shown in Table 1.

Table 1 Effective power reduction of MPE P-MPR

| MPE | Measured P-MPR value |
|---|---|
| 0 | P-MPR_00 |
| 1 | P-MPR_01 |
| 2 | P-MPR_02 |
| 3 | P-MPR_03 |

V field has a field length of 1 bit, and this field indicates whether the pH value is based on a real transmission or a reference format. For Type1 PH, 0 indicates being based on a real transmission of PUSCH, and 1 indicates being based on a reference format of PUSCH.

PH1: this field indicates a pH level of the first waveform. A length of the field is 6 bits, corresponding to a total of 64 PH levels from 0 to 63, indicating a range of values for primary cell (primary cell, PCell) Type 1 PH, PH1 is reported through quantization, specifically, as shown in Table 2.

Table 2 Power headroom level of PHR

| PH | Power headroom level |
|----|---------------------|
| 0 | POWER_HEADROOM_0 |
| 1 | POWER_HEADROOM_1 |
| 2 | POWER_HEADROOM_2 |
| 3 | POWER_HEADROOM_3 |
| ... | ... |
| 60 | POWER_HEADROOM_60 |
| 61 | POWER_HEADROOM_61 |
| 62 | POWER_HEADROOM_62 |
| 63 | POWER_HEADROOM_63 |

PH2: this field indicates a pH level of the second waveform. A length of the field is 6 bits, corresponding to a total of 64 PH levels from 0 to 63, indicating a range of values for PCell Type1 PH, PH2 is reported through quantization, specifically, as shown in Table 2 of a protocol.

$P_{CMAX}1$: this field indicates the maximum transmitting power of the first waveform. A length of the field is 6 bits, corresponding to a range of values of the nominal maximum transmitting power of the terminal device of the first waveform for a total of 64 from 0 to 63, this value is used to calculate the PH related to it, $P_{CMAX}1$ is reported through quantization, specifically, as shown in Table 3.

Table 3 Nominal terminal device transmitting power level of PHR

| $P_{CMAX}$ | Nominal terminal device transmitting power level |
|------------|--------------------------------------------------|
| 0 | PCMAX_C_00 |
| 1 | PCMAX_C_01 |
| 2 | PCMAX_C_02 |
| ... | ... |
| 61 | PCMAX_C_61 |
| 62 | PCMAX_C_62 |
| 63 | PCMAX_C_63 |

As another example, if the transmission performance condition is satisfied, the terminal device reports PH of the first waveform, $P_{CMAX}$ of the first waveform, and $P_{CMAX}$ of the second waveform through one MAC CE.

FIG. 5B is a schematic structure diagram 2 of a MAC CE provided in an embodiment of the present application. As shown in FIG. 5B, one 8-bit byte is added into a MAC CE.

R: a reserved bit (bit), set to 0.

P field has a field length of 1 bit, the field indicates whether the maximum transmitting power $P_{CMAX}$ has undergone power reduction due to power management.

If P=1, MPE1 indicates a power reduction value of the maximum transmitting power $P_{CMAX}1$ of the first waveform due to power management, MPE1 is reported through quantization, specifically, as shown in Table 1; if P=0, MPE1 field becomes reserved.

If P=1, MPE2 indicates a power reduction value of the maximum transmitting power $P_{CMAX}2$ of the second waveform due to power management, MPE2 is reported through quantization, specifically, as shown in Table 1. If P=0, MPE2 field becomes reserved.

PH1: this field indicates a pH level of the first waveform. A length of the field is 6 bits, corresponding to a total of 64 PH levels from 0 to 63, indicating a range of values for PCell Type 1 PH, PH1 is reported through quantization, specifically, as shown in Table 2.

$P_{CMAX}1$: a length of this field is 6 bits, corresponding to a range of values of the nominal maximum transmitting power of the terminal device of the first waveform for a total of 64 from 0 to 63, this value is used to calculate the PH related to it, $P_{CMAX}1$ is reported through quantization, specifically, as shown in Table 3.

$P_{CMAX}2$: a length of this field is 6 bits, corresponding to a range of values of the nominal maximum transmitting power of the terminal device of the second waveform for a total of 64 from 0 to 63, this value is used to calculate the PH related to it, $P_{CMAX}2$ is reported through quantization, specifically, as shown in Table 3.

As yet another example, if the transmission performance condition is satisfied, the terminal device reports PH of the first waveform, $P_{CMAX}$ of the first waveform, PH of the second waveform, and $P_{CMAX}$ of the second waveform through one MAC CE.

FIG. 5C is a schematic structure diagram 3 of a MAC CE provided in an embodiment of the present application. As shown in FIG. 5C, two 8-bit bytes are added into a MAC CE.

V field has a field length of 1 bit, and this field indicates whether the pH value is based on real transmission or reference format. For Type1 PH, 0 indicates being based on real transmission of PUSCH, and 1 indicates being based on reference format of PUSCH.

P1 field has a field length of 1 bit, and this field indicates whether the maximum transmitting power $P_{CMAX}1$ of the first waveform has power reduction due to power management; if P1=1, MPE1 field is to indicate a power reduction value, MPE1 is reported through quantization, specifically, as shown in Table 1. if P1=0, the MPE1 field becomes reserved.

P2 field has a field length of 1 bit, and this field indicates whether the maximum transmitting power $P_{CMAX}2$ of the second waveform has power reduction due to power management; if P2=1, MPE2 field is to indicate a power reduction value, MPE2 is reported through quantization, specifically, as shown in Table 1. if P2=0, MPE2 field becomes reserved.

PH1: this field indicates a pH level of the first waveform. A length of the field is 6 bits, corresponding to a total of 64 PH levels from 0 to 63, indicating a range of values for PCell Type 1 PH, PH1 is reported through quantization, specifically, as shown in Table 2.

PH2: this field indicates a pH level of the second waveform. A length of the field is 6 bits, corresponding to a total of 64 PH levels from 0 to 63, indicating a range of values for PCell Type1 PH, PH2 is reported through quantization, specifically, as shown in Table 2.

$P_{CMAX}1$: a length of this field is 6 bits, corresponding to a range of values of the nominal maximum transmitting power of the terminal device of the first waveform for a total of 64 from 0 to 63, this value is used to calculate the PH related to it, $P_{CMAX}1$ is reported through quantization, specifically, as shown in Table 3.

$P_{CMAX}2$: a length of this field is 6 bits, corresponding to a range of values of the nominal maximum transmitting power of the terminal device of the second waveform for a total of 64 from 0 to 63, this value is used to calculate the PH related to it, $P_{CMAX}2$ is reported through quantization, specifically, as shown in Table 3.

As yet another example, if the transmission performance condition is satisfied, the terminal device reports PH of the first waveform, $P_{CMAX}$ of the first waveform, and *offset1* and *offset2* of the second waveform.

Based on PH of the first waveform and *offset1* of the second waveform, PH of the second waveform can be calculated; based on $P_{CMAX}$ of the first waveform and *offset2* of the second waveform, $P_{CMAX}$ of the second waveform can be calculated.

As yet another example, if the transmission performance condition is satisfied, the terminal device reports PH of the first waveform, $P_{CMAX}$ and *offset1* of the first waveform.

As yet another example, if the transmission performance condition is satisfied, the terminal device reports PH of the first waveform, $P_{CMAX}$ and *offset2* of the first waveform.

In a possible implementation, if P field is set to 0, or if *mpe-Reporting* is not configured, or if an operating frequency band of a serving cell is FR1 frequency band, then the MPE (maximum permission exposure, maximum permission exposure) field becomes reserved bits, these two reserved bits can be used to indicate *offset1* and/or *offset2.*

In a possible implementation, if *MPE-reporting-FR2* is configured and the operating frequency band of the serving cell is FR2 frequency band, and P field is set to 1, then the field indicates power reduction to meet a MPE requirement. Then one reserved bit in a first byte of MAC CE can be used to indicate *offset1* and/or *offset2.*

In a possible implementation, one byte can be added to MAC CE and N bits of this byte can be used to indicate *offset1* and/or *offset2,* where 0<N≤8 bits.

FIG. 5D is a schematic structure diagram 4 of a MAC CE provided in an embodiment of the present application. As shown in FIG. 5D, one 8-bit byte is added into a MAC CE.

R: a reserved bit (bit), set to 0.

PH1: this field indicates a pH level of the first waveform. A length of the field is 6 bits, corresponding to a total of 64 PH levels from 0 to 63, indicating a range of values for PCell Type 1 PH, PH is reported through quantization, specifically, as shown in Table 2.

P: a length of this field is 1 bit, and this field indicates whether the corresponding $P_{CMAX}$ value has undergone power reduction due to power management. If P=1, MPE field is to indicate a power reduction value, MPE is reported through quantization, specifically, as shown in Table 1; if P=0, MPE field becomes reserved (reserved).

$P_{CMAX}$1: A length of this field is 6 bits, corresponding to a range of values of the nominal maximum transmitting power of the terminal device of the first waveform for a total of 64 from 0 to 63, this value is used to calculate the PH related to it, $P_{CMAX}$ is reported through quantization, specifically, as shown in Table 3.

offset: a length of this field can be N bits, with 0<N≤8 bits. This field can be used to indicate *offset1* and/or *offset2.* For example, when this field indicates *offset1* and *offset2,* each of them can be indicated by 4 bits.

In addition, in some embodiments of the present application, PH of the second waveform may be calculated based on the $P_{CMAX}$ of the second waveform.

Exemplarily, the PH of the second waveform can be determined based on the $P_{CMAX}$ of the second waveform, the target receiving power of PUSCH, the number of RBs occupied by PUSCH, the path loss compensation factor, the path loss, the power adjustment amount, and the closed-loop power control adjustment value. Here, the target receiving power of PUSCH, the number of RBs occupied by PUSCH, the path loss compensation factor, the path loss, the power adjustment amount, and the closed-loop power control adjustment value are the same as the parameter values used to calculate the PH of the first waveform.

Exemplarily, the PH of the second waveform can be determined based on the $P_{CMAX}$ of the second waveform, common target receiving power of a cell, terminal device dedicated target receiving power, the path loss compensation factor, the path loss, and the closed-loop power control adjustment value. Here, the common target receiving power of the cell is determined based on an index of a preset parameter set, the terminal device dedicated target receiving power and the path loss compensation factor are determined based on an index *p0-PUSCH-AlphaSetId* of a preset terminal device dedicated target receiving power-path loss compensation factor set, the path loss is determined based on an index *pusch-PathlossReferenceRS-Id* of a preset PUSCH path loss reference signal, and the closed-loop power control adjustment value is determined based on an index *l* of a preset closed-loop power control state.

In a possible implementation, an index *j* of the preset parameter set can be 0, that is, the common target receiving power of the cell is $P_{O\_NOMINAL,PUSCH}(0)$; the index *p0-PUSCH-AlphaSetId* of the preset terminal device dedicated target receiving power-path loss compensation factor set can be 0; the index *pusch-PathlossReferenceRS-Id* of the PUSCH path loss reference signal can be 0, and the index *l* of the closed-loop power control state can be 0.

When *pusch-PathlossReferenceRS-Id*=0, index $q_d$ of a reference signal can be determined, and the reference signal corresponding to the index can be measured to obtain PL of the second waveform.

It should be noted that the index *j* of the preset parameter set, the index *p0-PUSCH-AlphaSetId* of the preset terminal device dedicated target receiving power-path loss compensation factor set, the index *pusch-PathlossReferenceRS-Id* of the PUSCH path loss reference signal, and the index *l* of the closed-loop power control state can also be other values, and there is no limitation on this.

Exemplarily, the power headroom of the second waveform is determined based on $P_{CMAX}$ of the second waveform, the number of physical resource blocks RBs occupied by PUSCH, and power adjustment amount, where, the power adjustment amount is determined by a MCS, and the number of RBs occupied by PUSCH and MCS are predefined.

A specific calculation method for the PH of the second waveform can be found in the calculation method for the PH of the second waveform in the power headroom section described above, and will not be repeated here. Exemplarily, the PH of the second waveform can be determined based on one or more parameters such as the $P_{CMAX}$ of the second waveform, the target receiving power of PUSCH, the number of RBs occupied by PUSCH, the path loss compensation factor, the path loss, the power adjustment amount, and the closed-loop power control adjustment value. Regarding the target receiving power of PUSCH, the number of RBs occupied by PUSCH, the path loss compensation factor, the path loss, the power adjustment amount, and the closed-loop power control adjustment value, some parameters of them can be the same as calculating the PH of the first waveform, some parameters can be determined based on preset parameters, and/or some parameters are predefined. As an example, the PH of the second waveform can be determined based on the $P_{CMAX}$ of the second waveform, the target receiving power of PUSCH, the number of RBs occupied by PUSCH, the path loss compensation factor, the path loss, the power adjustment amount, and the closed-loop power control adjustment value, where the target receiving power of PUSCH is the same as the target receiving power of PUSCH used for calculating the first waveform. The number of RBs occupied by PUSCH is predefined. The path loss compensation factor is the same as the path loss compensation factor used for calculating the first waveform. The path loss is determined based on the index *pusch-PathlossReferenceRS-Id* of the preset PUSCH path loss reference signal. The power adjustment amount is determined based on the predefined MCS. The closed-loop power control adjustment value is determined based on the index *l* of a preset closed-loop power control state. As another example, the PH of the second waveform can be determined based on the $P_{CMAX}$ of the second waveform, the target receiving power of PUSCH of the second waveform, the number of RBs occupied by PUSCH, the path loss compensation factor, the path loss, the power adjustment amount, and the closed-loop power control adjustment value, where the number of RBs occupied by PUSCH, the path loss, the power adjustment amount, and closed-loop power control adjustment value are the same as the parameter values of the parameters used for calculating the PH of the first waveform. The target receiving power of PUSCH of the second waveform includes the common target receiving power of the cell and the terminal device dedicated target receiving power, where the common target receiving power of the cell is determined based on a value of a preset parameter, the preset parameter is a common target receiving power parameter of the cell configured for the second waveform, for example, *p0-NominalWithoutGrant-r18*; the terminal device dedicated target receiving power and the path loss compensation factor are determined based on the preset *p0-PUSCH-AlphaSetId.*

In addition, the present application can also be applied to a scenario of carrier aggregation (carrier aggregation, CA). In this scenario, for carriers with uplink transmission, V=0, in a case of using the first waveform for uplink transmission, if the transmission performance condition is satisfied and the transmission performance condition supports the use of the second waveform for the uplink transmission, the terminal device reports the power-related information of the second waveform. For carriers without the uplink transmission, V=1, there is no need to report the power-related information of the second waveform.

The embodiments of the present application provide a structure of a communication apparatus, the communication apparatus includes:

a communication module, configured to send power-related information of a second waveform, where the power-related information is used for assisting in determining waveform switching.

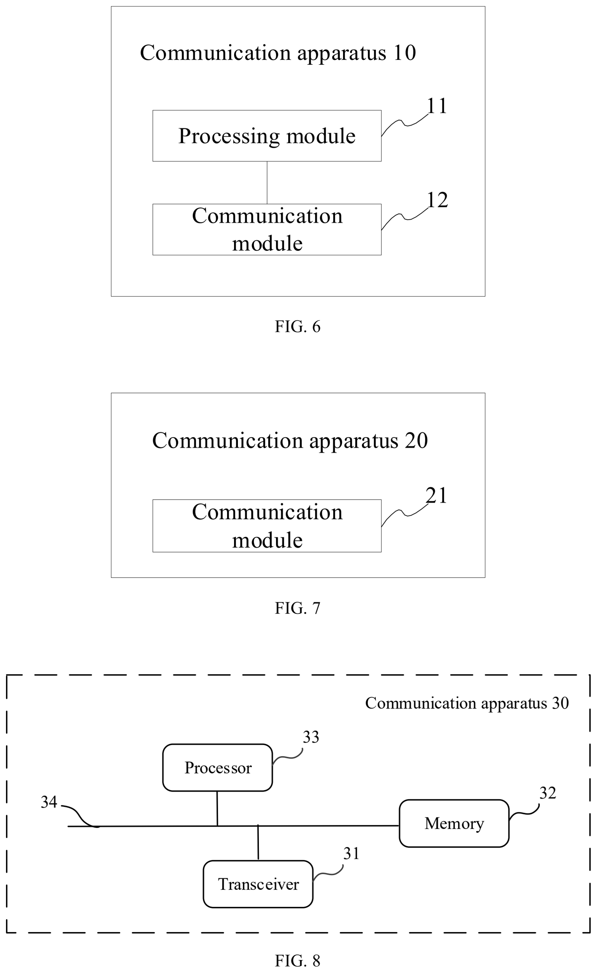

FIG. 6 is a schematic structure diagram of a communication apparatus provided in an embodiment of the present application. Please refer to FIG. 6, the apparatus 10 includes a processing module 11 and a communication module 12, where

the processing module 11 is configured to determine a transmission performance condition that satisfies a second waveform in a case where a first waveform is used for an uplink transmission, where the transmission performance condition supports the use of the second waveform for the uplink transmission;

the communication module 12 is configured to send power-related information of the second waveform, where the power-related information of the second waveform is used for assisting in determining waveform switching.

In a possible implementation, the power-related information is used to indicate a change in power between the first waveform and the second waveform

In a possible implementation, the first waveform is a CP-OFDM waveform, and the second waveform is a DFT-s-OFDM waveform.

In a possible implementation, transmission performance condition includes:

reference signal receiving power RSRP is less than a first RSRP threshold; and/or,

a path loss at a first time is greater than a path loss at a second time, and a difference between the path loss at the first time and the path loss at the second time is greater than a first value; and the first time is after the second time.

In a possible implementation, the first waveform is a DFT-s-OFDM waveform, and the second waveform is a CP-OFDM waveform.

In a possible implementation, transmission performance condition includes:

RSRP is greater than a second RSRP threshold; and/or,

the path loss at the first time is less than the path loss at the second time, and the difference between the path loss at the second time and the path loss at the first time is greater than a second value; and the first time is after the second time.

In a possible implementation, the power-related information of the second waveform includes at least one of the following:

power headroom of the second waveform, the maximum transmitting power of the second waveform, a power headroom offset, and a maximum transmitting power offset;

where the power headroom offset is used to represent a difference between the power headroom of the second waveform and power headroom of the first waveform, and the maximum transmitting power offset is used to represent a difference between the maximum transmitting power of the second waveform and the maximum transmitting power of the first waveform.

In a possible implementation, the maximum transmitting power of the second waveform and the maximum transmitting power of the first waveform are different.

In a possible implementation, the power headroom of the second waveform is determined based on the maximum transmitting power of the second waveform;

or,

the power headroom of the second waveform is determined based on the maximum transmitting power of the second waveform, common target receiving power of a cell, terminal device dedicated target receiving power, a path loss compensation factor, a path loss and a closed-loop power control adjustment value; where the common target receiving power of the cell is determined based on an index of a preset parameter set, the terminal device dedicated target receiving power and the path loss compensation factor are determined based on an index of a preset terminal device dedicated target receiving power-path loss compensation factor set, the path loss is determined based on an index of a preset PUSCH path loss reference signal, and the closed-loop power control adjustment value is determined based on an index of a preset closed-loop power control state;

or,

the power headroom of the second waveform is determined based on the maximum transmitting power of the second waveform, the number of RBs occupied by PUSCH, and the power adjustment amount; where the power adjustment amount is determined by a MCS, and the number of RBs occupied by PUSCH and the MCS are predefined.

In a possible implementation, the communication module 12 is specifically configured to:
send a MAC CE, where the MAC CE includes the power-related information of the second waveform.

In a possible implementation, the uplink transmission is located on one carrier in carrier aggregation.

In a possible implementation, the communication module 12 is specifically configured to:
receive a waveform switching instruction.

The communication apparatus 10 provided in the embodiments of the present application can execute the technical solutions shown in the above method embodiments, and the implementation principles and beneficial effects thereof are similar, which will not be repeated here.

FIG. 7 is a schematic structure diagram of another communication apparatus provided in an embodiment of the present application. Please refer to FIG. 7, an apparatus 20 includes a communication module 21, where the communication module 21 is configured to:

in a case where a first waveform is used for an uplink transmission, receive power-related information of a second waveform, where the power-related information of the second waveform is used for assisting in determining waveform switching;

send a waveform switching instruction based on the power-related information of the second waveform.

In a possible implementation, the power-related information is used to indicate change information in power between the first waveform and the second waveform.

In a possible implementation, the power-related information of the second waveform includes at least one of the following:

power headroom of the second waveform, a maximum transmitting power of the second waveform, a power headroom offset, and a maximum transmitting power offset;

where the power headroom offset is used to represent a difference between the power headroom of the second waveform and power headroom of the first waveform, and the maximum transmitting power offset is used to represent a difference between the maximum transmitting power of the second waveform and the maximum transmitting power of the first waveform.

In a possible implementation, the communication module 21 is specifically configured to:
receive a MAC CE, where the MAC CE includes the power-related information of the second waveform.

The communication apparatus 20 provided in the embodiments of the present application can execute the technical solutions shown in the above method embodiments, and the implementation principles and beneficial effects thereof are similar, which will not be repeated here.

FIG. 8 is a schematic structure diagram of yet another communication apparatus provided in an embodiment of the present application. Please refer to FIG. 8, the communication apparatus 30 includes a memory 32 and a processor 33. Furthermore, the apparatus 30 may further include a transceiver 31.

The transceiver 31 may include a transmitter and/or a receiver. The transmitter can also be referred to as a sender, a transmitting device, a transmitting port, or a transmitting interface, etc., and the receiver can also be referred to as a receiver, a receiving device, a receiving port, or a receiving interface, etc. Exemplarily, the transceiver 31, the memory 32, and the processor 33 are interconnected through a bus 34.

Exemplarily, the communication apparatus may be a terminal device, a chip, a chip module, or an integrated development environment (integrated development environment, IDE) in a terminal device, and the like.

The memory 32 is configured to store program instructions.

The processor 33 is configured to execute the program instructions stored in the memory, causing the communication apparatus 30 to perform the steps performed by the terminal device in any of the communication methods described above.

The transceiver 31 is configured to perform the transmitting and receiving functions of the terminal device in the communication methods described above.

Exemplarily, the communication apparatus may be a network device, a chip, a chip module, or an IDE in a network device, and the like.

The memory 32 is configured to store program instructions.

The processor 33 is configured to execute the program instructions stored in the memory, causing the communication apparatus 30 to perform the steps performed by the network device in any of the communication methods described above.

The transceiver 31 is configured to perform the transmitting and receiving functions of the network device in the communication methods described above.

The communication apparatus 30 shown in an embodiment of FIG. 8 can execute the technical solutions shown in the above method embodiments, and the implementation principles and beneficial effects thereof are similar, which will not be repeated here.

The embodiments of the present application provide a computer-readable storage medium, where the computer-readable storage medium stores computer executed instructions therein, and when the computer executed instructions are executed by a computer, any of the above communication methods is implemented.

The embodiments of the present application provide a computer program product, where the computer program product can be executed by a processor, and when the computer program product is executed, any of the above communication methods is implemented.

The computer-readable storage medium and the computer program product of the embodiments of the present application can execute the above communication methods. The specific implementation processes and beneficial effects are described above and will not be repeated here.

All or part of the steps for implementing the above methods can be completed through hardware related to the program instructions. The program described above can be stored in a readable memory. When the program is executed, the steps of the above method embodiments are performed. The memory (readable storage medium) described above includes: a read-only memory (read-only memory, ROM), a random access memory (random access memory, RAM), a flash memory, a hard disk, a solid-state drive, a magnetic tape (magnetic tape), a floppy disk (floppy disk), an optical disc (optical disc), and any combination thereof.

The embodiments of the present application are described with reference to a flowchart and/or a block diagram of a method, apparatus (system), and computer program product based on the embodiments of the present application. It should be understood that each process and/or block in the flowchart and/or block diagram, as well as a combination of processes and/or blocks in the flowchart and/or block diagram, can be implemented by computer program instructions. These computer program instructions can be provided to a processing unit of a general purpose computer, a specialized computer, an embedded processing machine, or other programmable data processing devices to produce a machine so that the instructions executed through the processing unit of the computer or other programmable data processing device produce an apparatus for performing the functions specified in one or more processes in the flowchart and/or one or more blocks in the block diagrams.

These computer program instructions can also be stored in a computer-readable memory capable of directing a computer or other programmable data-processing device to work in a particular manner so that the instructions stored in the computer-readable memory result in a manufactured product including an instruction apparatus, where the instruction apparatus implements the functions specified in one or more processes in the flowchart and/or one or more blocks in the block diagrams.

These computer program instructions can also be loaded onto a computer or other programmable data processing device so that a series of operational steps are performed on the computer or other programmable device to produce computer-implemented processing, so that the instructions executed on the computer or other programmable device provide steps for implementing the functions specified in one or more processes in the flowchart and/or one or more blocks in the block diagrams.

Obviously, a person skilled in the art may make various modifications and variants to the embodiments of the present application without departing from the spirit and scope of the present application. Thus, if these modifications and variants of the embodiments of the present application fall within the scope of the claims of the present application and equivalents thereof, the present application is also intended to include such modifications and variants.

**Claims**

1. A communication method, comprising:
with a first waveform being used for an uplink transmission, sending power-related information of a second waveform, wherein the power-related information of the second waveform is used for assisting in determining waveform switching, and the second waveform is a candidate waveform.

2. The method according to claim 1, wherein the power-related information is used to indicate a change in power between the first waveform and the second waveform.

3. The method according to claim 1 or 2, wherein the first waveform is a Cyclic Prefix-Orthogonal Frequency Division Multiplexing CP-OFDM waveform, and the second waveform is a Discrete Fourier Transform-spread Orthogonal Frequency Division Multiplexing DFT-s-OFDM waveform.

4. The method according to claim 1 or 2, wherein the first waveform is a DFT-s-OFDM waveform, and the second waveform is a CP-OFDM waveform.

5. The method according to claim 1 or 2, wherein the power-related information of the second waveform comprises at least one of the following:

power headroom of the second waveform, a maximum transmitting power of the second waveform, a power headroom offset, or a maximum transmitting power offset;
wherein the power headroom offset is used to represent a difference between the power headroom of the second waveform and power headroom of the first waveform, and the maximum transmitting power offset is used to represent a difference between the maximum transmitting power of the second waveform and a maximum transmitting power of the first waveform.

6. The method according to claim 5, wherein the maximum transmitting power of the second waveform and the maximum transmitting power of the first waveform are different.

7. The method according to claim 5, wherein the power headroom of the second waveform is determined based on the maximum transmitting power of the second waveform;
or,

the power headroom of the second waveform is determined based on the maximum transmitting power of the second waveform, common target receiving power of a cell, terminal device dedicated target receiving power, a path loss compensation factor, a path loss and a closed-loop power control adjustment value; wherein the common target receiving power of the cell is determined based on an index of a preset parameter set, the terminal device dedicated target receiving power and the path loss compensation factor are determined based on an index of a preset terminal device dedicated target receiving power-path loss compensation factor set, the path loss is determined based on an index of a preset PUSCH path loss reference signal, and the closed-loop power control adjustment value is determined based on an index of a preset closed-loop power control state;
or,
the power headroom of the second waveform is determined based on the maximum transmitting power of the second waveform, the number of physical resource blocks RBs occupied by PUSCH, and a power adjustment amount; wherein the power adjustment amount is determined by a modulation and coding scheme MCS, and the number of the RBs occupied by PUSCH and the MCS are predefined.

8. The method according to claim 1 or 2, wherein the sending the power-related information of the second waveform comprises:
sending a media access control-control unit MAC CE, wherein the MAC CE comprises the power-related information of the second waveform.

9. The method according to claim 1 or 2, wherein the uplink transmission is located on one carrier in carrier aggregation.

10. The method according to claim 1 or 2, wherein the method further comprises:
receiving a waveform switching instruction.

11. A communication method, comprising:

with a first waveform being used for an uplink transmission, receiving power-related information of a second waveform, wherein the power-related information of the second waveform is used for assisting in determining waveform switching;
sending a waveform switching instruction based on the power-related information of the second waveform.

12. The method according to claim 11, wherein the power-related information is used to indicate change information in power between the first waveform and the second waveform.

13. The method according to claim 11 or 12, wherein the power-related information of the second waveform comprises at least one of the following:

power headroom of the second waveform, a maximum transmitting power of the second waveform, a power headroom offset, or a maximum transmitting power offset;
wherein the power headroom offset is used to represent a difference between the power headroom of the second waveform and power headroom of the first waveform, and the maximum transmitting power offset is used to represent a difference between the maximum transmitting power of the second waveform and a maximum transmitting power of the first waveform.

14. The method according to claim 11, wherein the receiving the power-related information of the second waveform comprises:
receiving a media access control-control unit MAC CE, wherein the MAC CE comprises the power-related information of the second waveform.

15. A communication apparatus, comprising: a processing module and a communication module, wherein
the processing module is configured to, with a first waveform being used for an uplink transmission, trigger the communication module to send power-related information of a second waveform, wherein the power-related information of the second waveform is used for assisting in determining waveform switching, and the second waveform is a candidate waveform.

16. A communication apparatus, comprising: a communication module, wherein the communication module is configured to:

with a first waveform being used for an uplink transmission, receive power-related information of a second waveform, wherein the power-related information of the second waveform is used for assisting in determining waveform switching;
send a waveform switching instruction based on the power-related information of the second waveform.

17. A communication apparatus, comprising: a processor, and a memory; wherein

the memory stores computer executed instructions therein; and
the processor executes the computer executed instructions stored in the memory, causing the processor to perform the method according to any one of claims 1 to 10, or the method according to any one of claims 11 to 14.

18. A computer-readable storage medium, wherein the computer-readable storage medium stores computer executed instructions therein, and when the computer executed instructions are executed by a processor, the method according to any one of claims 1 to 10, or the method according to any one of claims 11 to 14 is implemented.

101

102

FIG. 1

| Terminal device | | Network device |

S201, Send power-related information of a second waveform

S202, Send a waveform switching instruction based on the power-related information

FIG. 2

T2    T1    Time

FIG. 3

TW2    TW1

Time

FIG. 4A

TWA

TWB

Time

FIG. 4B

| | | |
|---|---|---|
| P | V | PH1(Type 1,Pcell) |
| MPE or R | | $P_{CMAX}1$ |
| P | V | PH2(Type 1,Pcell) |

FIG. 5A

| | | |
|---|---|---|
| P | R | PH1(Type 1,Pcell) |
| MPE1 or R | | $P_{CMAX}1$ |
| MPE2 or R | | $P_{CMAX}2$ |

FIG. 5B

| | | |
|---|---|---|
| P1 | V | PH1(Type 1,Pcell) |
| MPE1 or R | | $P_{CMAX}1$ |
| P2 | V | PH2(Type 1,Pcell) |
| MPE2 or R | | $P_{CMAX}2$ |

FIG. 5C

| | | |
|---|---|---|
| P | R | PH1(Type 1,Pcell) |
| MPE1 or R | | $P_{CMAX}1$ |
| R | | offset |

FIG. 5D

FIG. 6

FIG. 7

FIG. 8

## INTERNATIONAL SEARCH REPORT

| International application No. |
| --- |
| **PCT/CN2024/070949** |

| | |
| --- | --- |
| **A.** | **CLASSIFICATION OF SUBJECT MATTER** |
| | H04W72/0453(2023.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, CJFD, CNKI, 3GPP, ISI: 功率, 功率余量, 波形, 切换, power, power headroom, waveform, switch

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 114125955 A (HUAWEI TECHNOLOGIES CO., LTD.) 01 March 2022 (2022-03-01) description, paragraphs 187-270, and figure 8 | 1-18 |
| A | CN 113518416 A (GUANGDONG OPPO MOBILE TELECOMMUNICATIONS CORP., LTD.) 19 October 2021 (2021-10-19) entire document | 1-18 |
| A | CN 114071680 A (HUAWEI TECHNOLOGIES CO., LTD.) 18 February 2022 (2022-02-18) entire document | 1-18 |
| A | US 2022210748 A1 (ASUSTEK COMPUTER INC.) 30 June 2022 (2022-06-30) entire document | 1-18 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 March 2024** | **21 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/070949** |

| Patent document cited in search report | | | Publication date (day/month/year) | Patent family member(s) | | | Publication date (day/month/year) |
|---|---|---|---|---|---|---|---|
| CN | 114125955 | A | 01 March 2022 | WO | 2022042247 | A1 | 03 March 2022 |
| | | | | EP | 4192105 | A1 | 07 June 2023 |
| CN | 113518416 | A | 19 October 2021 | | None | | |
| CN | 114071680 | A | 18 February 2022 | WO | 2022022306 | A1 | 03 February 2022 |
| | | | | IN | 202347009502 | A | 17 February 2023 |
| | | | | EP | 4185022 | A1 | 24 May 2023 |
| | | | | US | 2023171704 | A1 | 01 June 2023 |
| US | 2022210748 | A1 | 30 June 2022 | KR | 20220097321 | A | 07 July 2022 |
| | | | | EP | 4024969 | A1 | 06 July 2022 |
| | | | | CN | 114698083 | A | 01 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310014438